# EUROPÄISCHE PATENTSCHRIFT

(11) **EP 3 494 317 B1**
(45) Veröffentlichungstag und Bekanntmachung des Hinweises auf die Patenterteilung: **20.01.2021**
(21) Anmeldenummer: 17730653.7
(22) Anmeldetag: 18.05.2017
(51) Int. Cl.: F16C 33/46, F16C 19/24, B23B 41/04, B23D 37/00

(54) **SEITENRING EINES MEHRTEILIGEN WÄLZLAGERKÄFIGS, VERFAHREN ZUM FERTIGEN DES SEITENRINGS SOWIE MEHRTEILIGER WÄLZLAGERKÄFIG**
END RING FOR A MULTI-PART ROLLING BEARING CAGE, METHOD OF MANUFACTURING THE END RING AND MULTI-PART ROLLING BEARING CAGE
ANNEAU D'EXTRÉMITÉ D'UNE CAGE DE ROULEMENT EN PIÈCES MULTIPLES PARTS, PROCÉDÉ DE FABRICATION DE L'ANNEAU D'EXTRÉMITÉ ET CAGE DE ROULEMENT EN PIÈCES MULTIPLES

(30) Priorität: 04.08.2016 DE 102016214450
(43) Veröffentlichungstag der Anmeldung: 12.06.2019
(73) Patentinhaber: Schaeffler Technologies AG & Co. KG, 91074 Herzogenaurach (DE)
(72) Erfinder: SANDERS, Bernhard, 90574 Roßtal (DE)
(86) Internationale Anmeldenummer: PCT/DE2017/100429
(87) Internationale Veröffentlichungsnummer: WO 2018/024276

(56) Entgegenhaltungen:
- DE-A1- 1 552 391
- DE-A1- 3 415 487
- DE-A1-102009 030 821
- DE-A1-102013 221 240
- DE-U1- 9 309 505
- GB-A- 1 562 140
- US-A- 2 483 695
- US-A- 3 537 766
- US-A- 3 647 273

## Beschreibung

Die Erfindung betrifft einen Seitenring eines mehrteiligen Käfigs für ein Wälzlager mit den Merkmallen des Oberbegriffs des Anspruchs 1. Die Erfindung betrifft auch ein Verfahren zum Fertigen des Seitenrings sowie einen Käfig, weiterhin ein Wälzlager.

Bei Wälzlagern werden die Wälzkörper oftmals in Käfigen geführt. Die Käfige können zum einen als Massivkäfige ausgebildet sein, zum anderen ist es möglich, dass diese aus mehreren Teilen zusammengefügt werden. Beispielsweise ist es bekannt, einen Käfig für ein Wälzlager aus zwei Seitenteilen und dazwischen verlaufenden Stegen zu bilden, wobei die Stege mit den Seitenteilen über ein Nietverfahren miteinander verbunden werden.

So zeigen beispielsweise die DE 10 2008 020 409 A, DE 20 2013 221 240 A1 oder die DE 10 2006 052 762 A1 Käfige mit derartigen vernieteten Seitenteilen.

Die US 2 483 695 A beschreibt ein Verfahren zum Zusammenbau eines konischen Wälzlagerkäfigs mit einem kleineren und einem größeren Seitenring.

Die US 3 537 766 A beschreibt einen Wälzlagerkäfig mit zwei Seitenteilen. Die Öffnungen in den Seitenteilen sind durch Stanzen oder Räumen gebildet.

Die DE 10 2009 030 821 A1 offenbart ein Werkzeug mit einem symmetrischen Schneidkörper zur Herstellung eines Innenmehrkants in einem Werkstück, wobei ein Schneidkeil des Schneidkörpers mehrmals nacheinander in eine Öffnung im Werkstück geführt wird. Die Mittelachse des Schneidkörpers ist zur Mittelachse des Werkzeuges um einen Neigungswinkel geneigt angeordnet.

Die DE 93 09 505 U1 beschreibt eine Vorrichtung zur spanabhebenden Herstellung von Profilen, wobei die Werkzeugachse axial um einen Winkel geneigt zur Werkstückachse angeordnet ist.

Aus einem anderen technischen Bereich ist als Fertigungsverfahren das sogenannte Pendelräumen bekannt. Bei dem Pendelräumen wird aus einer rotatorischen Bewegung einer Antriebseinrichtung eine pendelnde Bewegung eines Werkzeugs gebildet. Das pendelnde Werkzeug hat die gleiche Außenkontur wie eine zu bildende Kontur in einem Werkstück. Durch das Pendeln des Werkzeugs wird die Kontur des Werkzeugs auf das Werkstück übertragen, wobei während des Pendels ein trennendes Verfahren durchgeführt wird. Zum Pendelräumen ist beispielsweise die Druckschrift DE 1 552 391 C3 bekannt, die das Verfahren und ein entsprechendes Werkzeug grundlegend beschreibt.

Es ist Aufgabe der vorliegenden Erfindung, einen Seitenring sowie ein Verfahren zum Fertigen des Seitenrings vorzuschlagen, wobei die Fertigungskosten reduziert werden können. Weiterhin soll ein kostengünstig herstellbarer Käfig mit mindestens einem derartigen Seitenring vorgeschlagen werden sowie ein Wälzlager mit einem derartigen Käfig.

Diese Aufgabe wird durch einen Seitenring mit den Merkmalen des Anspruchs 1 sowie durch ein Verfahren mit den Merkmalen des Anspruchs 6, durch einen Käfig mit den Merkmalen des Anspruchs 9 sowie ein Wälzlager mit den Merkmalen des Anspruchs 10 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Seitenring eines mehrteiligen Käfigs für ein Wälzlager. Bei dem Wälzlager handelt es sich vorzugsweise um ein Radialwälzlager. Der Käfig ist insbesondere als ein Nietkäfig ausgebildet, wobei die mehreren Teile des Käfigs miteinander vernietet werden. Der Seitenring weist bevorzugt eine Kreisringform auf, in der axialen Erstreckung kann der Seitenring konturiert ausgebildet sein.

Der Seitenring weist eine Mehrzahl von Fenstern, insbesondere von Durchbrüchen, auf, welche zur Aufnahme von Stegen dienen. Somit werden bei der Montage des Käfigs die Stege, die an einem Käfigrohling oder Käfigbauteil angeordnet sind, in die Fenster eingeführt und dort über ein Nietverfahren befestigt. Vorzugsweise weist der Käfig einen oder zwei derartige Seitenringe auf. Sind beidseitig Stege an einzelnen Käfigbauteilen vorgesehen, wobei benachbarte Käfigbauteile später Käfigtaschen für Wälzkörper ausbilden, so werden die Käfigbauteile an beiden axialen Seiten durch einen derartigen Seitenring gehalten.

Im Rahmen der Erfindung wird vorgeschlagen, dass die Fenster mittels Pendelräumen - im Englischen auch "pendular broaching" genannt - eingebracht sind. Insbesondere werden die Fenster mittels dem Verfahren gemäß Anspruch 6 eingebracht, welches später noch ausführlich erläutert wird.

Vergleicht man die erfindungsgemäße Ausgestaltung des Seitenrings mit einer üblichen Fertigung eines Seitenrings für einen derartigen Käfig, so sind die eingesparten Fertigungskosten deutlich erkennbar:
Bislang wurde ein Rohteil in Übermaß gefertigt, in einem ersten Schritt die Fenster vorgebohrt und nachfolgend ausgestanzt. Durch die hohen Stanzkräfte kommt es zum einen zu einer Gratbildung an den Fenstern und zum anderen zu einer Deformation des Rohteils. Somit erfolgten als nächste Arbeitsschritte ein Richten des gestanzten Rohteils und ein Abdrehen des Aufmaßes des Rohteils. In einem letzten Schritt musste noch ein manuelles Entgraten der Fenster erfolgen.

Demgegenüber erlaubt das erfindungsgemäße Verfahren, auf Basis eines Rohseitenrings, welches bevorzugt als ein Drehteil ausgebildet ist, die Fenster mittels Pendelräumen einzubringen und aufgrund der hohen Fertigungsqualität und zugleich geringen Belastung des Rohseitenrings auf weitere Arbeitsschritte, wie das Richten und das zweite Abdrehen, zu verzichten. Insbesondere kann der Rohseitenring ohne Materialzugabe oder Aufmaß bis auf die Fenster in Endkontur gefertigt werden.

Optional kann ein Entgraten erfolgen, welches jedoch aufgrund der geringen Gratbildung maschinell durchgeführt werden kann.

Erfindungsgemäß ist der Seitenring oder der Rohseitenring aus einem Buntmetall gefertigt. Als Buntmetall kommt insbesondere Messing als Werkstoff für den Seitenring in Betracht. In dieser Ausgestaltung ist das trennende Verfahren des Pendelräumens besonders einfach umsetzbar und das im Gegensatz zu Stahl weichere Buntmetall wird durch das Verfahren des Pendelräumens nicht stark belastet. Folglich wird eine Deformation des Rohseitenrings durch das erfindungsgemäße Verfahren vermieden

Vorzugsweise ist das Wälzlager als ein mittelgroßes Wälzlager ausgebildet. Der Seitenring weist vorzugsweise einen Außendurchmesser von größer als 15 cm, insbesondere größer als 20 cm, auf. Bei dieser Größe erhöht sich bei einer Stanzung die Gefahr des Verziehens des Seitenrings in der Gesamtheit, so dass bei dieser Weiterbildung die Vorteile der Erfindung besonders stark in den Vordergrund kommen.

Es ist bevorzugt, dass der Seitenring mindestens 10, vorzugsweise mindestens 20 Fenster in Umlaufrichtung aufweist. Die Fenster sind in Umlaufrichtung gleichmäßig verteilt, sodass durch die nach dem Vernieten der Käfigbauteile und Seitenringe gebildeten Käfigtaschen Aufnahmen für die Wälzkörper bilden, welche ebenfalls in Umlaufrichtung gleichmäßig verteilt sind. Es ist jedoch auch möglich, dass abgewandelte Käfigformen umgesetzt sind, wobei zum Beispiel zwischen zwei Wälzkörpern eine Doppelsteganordnung positioniert ist.

Bei einer bevorzugten Weiterbildung der Erfindung ist der Seitenring und/oder der Rohseitenring als ein Drehteil ausgebildet. Insbesondere ist mindestens eine axiale Seitenfläche, vorzugsweise beide axiale Seitenflächen, durch eine Drehbearbeitung endgefertigt. In dieser Ausgestaltung ergibt sich eine bevorzugte Verfahrensfolge Drehen/Pendelräumen zur Fertigung des Seitenrings.

Erfindungsgemäß weisen die Fenster jeweils einen Außenrand, einen Innenrand und zwei Seitenränder als Begrenzungen auf. Der Außenrand ist radial außen, der Innenrand radial innen und die zwei Seitenränder dienen als Abgrenzung des Fensters in Umlaufrichtung. Es ist vorgesehen, dass der Außenrand länger als der Innenrand ausgebildet ist und dass die Seitenränder gekrümmt ausgebildet sind. Somit ergibt sich für das Fenster zwar eine annähernd trapezähnliche Form, die jedoch als Freiform in mindestens einem, einigen oder allen Kantenverläufen ausgebildet ist. Die Fertigung des Fensters mit nicht-geradlinigen Verläufen und/oder Freiformverläufen kann in einfacher Weise durch das Pendelräumen umgesetzt werden, wobei das zugrunde liegende Werkzeug zwar in einer anderen Größe, jedoch ansonsten den gleichen Konturverlauf aufweist. Somit muss die Kontur des Fensters nur einmal als Werkzeug gefertigt werden und kann nachfolgend eine Vielzahl von Fenstern trennend in den Rohseitenring einbringen.

Es ist bevorzugt, dass die Fenster in axialer Richtung, insbesondere in Durchbruchsrichtung, ein konstantes Profil und/oder eine konstante Kontur aufweisen. Dies ist ein weiteres Merkmal des Pendelräumens, da durch das Pendelräumen die Kontur des Werkzeugs quasi vergrößert in das Werkstück eingebracht wird.

Ein weiterer Gegenstand der Erfindung betrifft ein Verfahren zum Fertigung des erfindungsgemäßen Seitenrings. Bei dem erfindungsgemäßen Verfahren ist vorgesehen, dass in einen Rohseitenring die Fenster mittels Pendelräumen eingebracht werden, um den erfindungsgemäßen Seitenring zu fertigen.

Eine mögliche Ausgestaltung des Pendelräumens ist in der eingangs genannten Druckschrift DE 1 552 391 C3 beschrieben.

Bei dem Pendelräumen wird mittels einer Umsetzungseinrichtung eine rotierende Bewegung, welche beispielsweise mittels eines Elektromotors erzeugt wird, in eine pendelnde, nicht rotierende Bewegung eines Werkzeugs umgesetzt. Beispielsweise ist vorgesehen, dass in einem rotierenden Werkzeugfutter eine Werkzeugwelle drehbar gelagert ist. Auf der Werkzeugwelle ist das Werkzeug zum Einbringen der Fenster aufgesetzt.

Es ist jedoch vorgesehen, dass die Rotationsachse des Werkzeugfutters und die Rotationsachse der Werkzeugwelle um einen Winkel zueinander verkippt sind. Ein derartiger Winkel kann beispielsweise 1 Grad betragen. Durch das Verkippen der zwei Rotationsachsen wird erreicht, dass bei einer Rotation des Werkzeugfutters die Werkzeugwelle gependelt wird und/oder taumelt.

Optional ergänzend ist vorgesehen, dass die Werkzeugwelle mittels einer Halteeinrichtung davon abgehalten wird, zu rotieren. Eine einfache Ausbildung einer möglichen Halteeinrichtung ist in der genannten Druckschrift dargestellt. Bei der Halteeinrichtung handelt es sich beispielsweise um einen Hebel, welcher senkrecht zu der Werkzeugwelle in der Werkzeugwelle befestigt ist. Der Hebel schlägt gegen einen stationären Anschlag, sodass eine Rotation der Werkzeugwelle verhindert ist, jedoch das Pendeln beziehungsweise Taumeln der Werkzeugwelle ermöglicht wird.

Bei einer bevorzugten Ausgestaltung des Verfahrens weist das Werkzeug zum Einbringen der Fenster ein Werkzeugprofil auf, welches im mathematischen Sinn ähnlich zum Profil des Fensters ist. Das Werkzeug ist insbesondere als ein Trennwerkzeug ausgebildet. Im mathematischen Sinn ähnlich bedeutet, dass das Profil des Werkzeugs, wenn man dieses unter Beibehaltung der Proportionen vergrößert, dem Profil des Fensters entspricht.

Es ist besonders bevorzugt, dass der Rohseitenring als ein Drehteil ausgebildet ist. Insbesondere sind die axialen Seiten des Rohseitenrings bis auf die Bereiche des Fensters in Endkontur gefertigt, sodass diese in der identischen Form in den Käfig eingebaut werden.

Es ist besonders bevorzugt, dass der Seitenring automatisiert entgratet wird.

Ein weiterer Gegenstand der Erfindung ist ein Käfig, umfassend mindestens einen erfindungsgemäßen Seitenring sowie mindestens einen Käfigrohling mit mindestens einem Steg, wobei der mindestens eine Steg durch den mindestens einen Seitenring geführt und vernietet ist. Dabei hat es sich bewährt, einen Käfigrohling mit mehreren Stegen mit einem Seitenring zu vernieten, wobei die Stege durch die Fenster des einen Seitenrings gesteckt und vernietet sind. Alternativ hat es sich bewährt, mehrere Käfigrohlinge oder Käfigbauteile mit jeweils zwei Stegen mit zwei Seitenringen zu vernieten, wobei jeder der beiden Stege durch einen der beiden Seitenringe gesteckt und dann vernietet wird. Somit werden hier die einzelnen Käfigbauteile erst über die beiden Seitenringe miteinander zu dem Käfig verbunden.

Der Käfig ist dabei aus einem Buntmetall, besonders bevorzugt aus Messing, gebildet.

Die Aufgabe wird weiterhin durch ein Wälzlager gelöst, umfassend einen erfindungsgemäßen Käfig, eine Anzahl an Wälzkörpern, einen Innenring mit mindestens einer Laufbahn und einen Außenring mit mindestens einer weiteren Laufbahn.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine Draufsicht auf einen Seitenring als ein erstes Ausführungsbeispiel der Erfindung;
Figur 2 einen Teilabschnitt des Seitenrings in der Figur 1;
Figur 3 eine schematische dreidimensionale Darstellung einer Vorrichtung zum Pendelräumen zum Erzeugen der Fenster in den Seitenring der vorhergehenden Figuren;
Figur 4 die Vorrichtung bei der Bearbeitung eines Rohseitenrings;
Figur 5 einen Seitenring und einen Käfigrohling mit Stegen in dreidimensionaler Ansicht;
Figur 6 einen Ausschnitt eines Käfigrohlings mit Stegen in dreidimensionaler Ansicht;
Figur 7 einen Halbschnitt durch einen Käfig umfassend einen Seitenring.

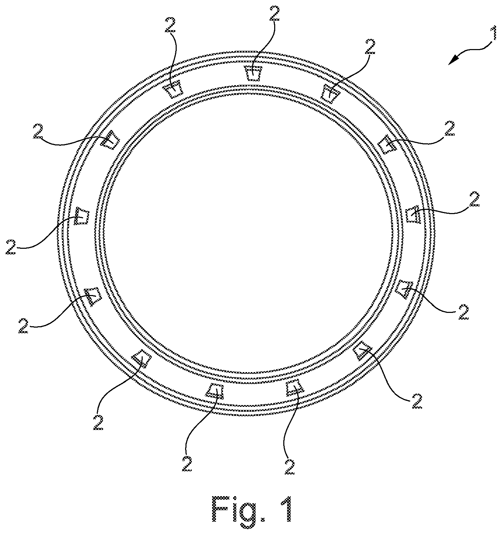

Die Figur 1 zeigt in einer Draufsicht einen Seitenring 1 für einen Käfig eines Wälzlagers als ein Ausführungsbeispiel der Erfindung. Der Käfig benötigt einen oder zwei derartige Seitenringe, wobei mindestens ein Käfigrohling mit mindestens einem Käfigtaschen-Begrenzungselement, mit je einem oder zwei Stegen, vorgesehen ist, wobei die Käfigtaschen-Begrenzungselemente am fertigen Käfig die Wälzkörper in Umlaufrichtung voneinander beabstanden.

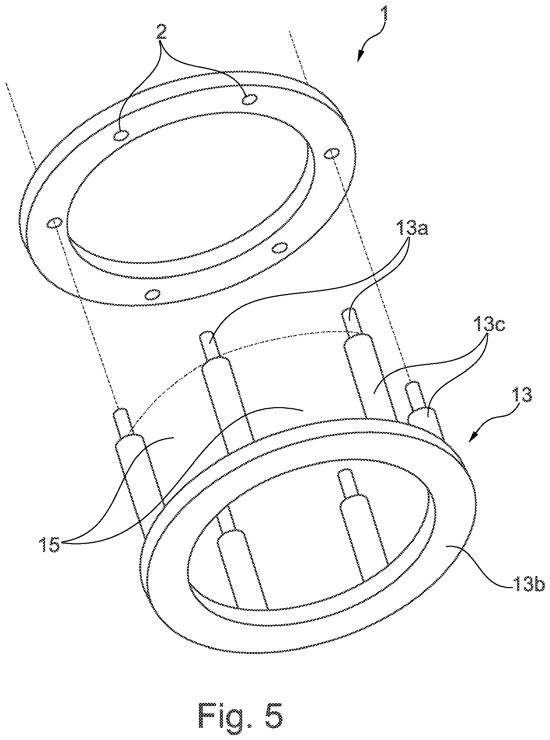

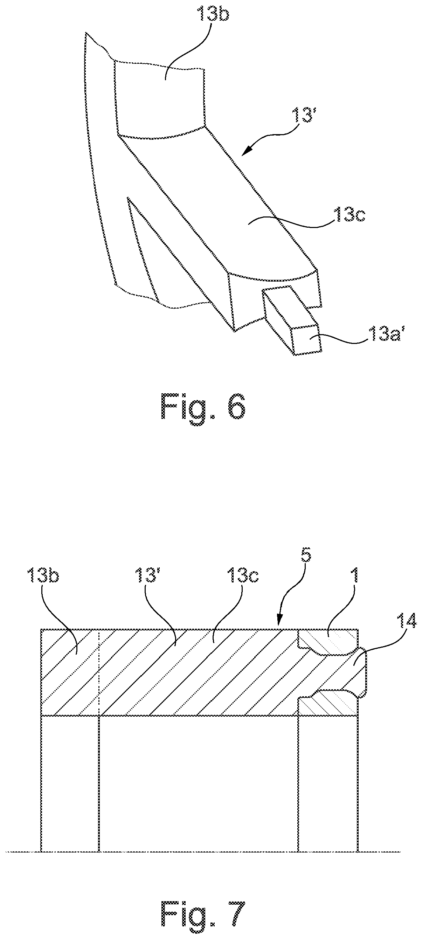

Der Seitenring 1 weist eine Mehrzahl von Fenstern 2 auf, welche in Umlaufrichtung regelmäßig verteilt sind. Die Fenster dienen zum Einstecken von Stegen 13a, 13a' (vergleiche Figuren 5 und 6). Nach dem Einstecken der Stege 13a, 13a' können diese vernietet werden, sodass Stege 13a, 13a' und Seitenring 1 unverlierbar miteinander verbunden sind. Insbesondere sind diese nach dem Nietvorgang form- und/oder kraftschlüssig miteinander verbunden.

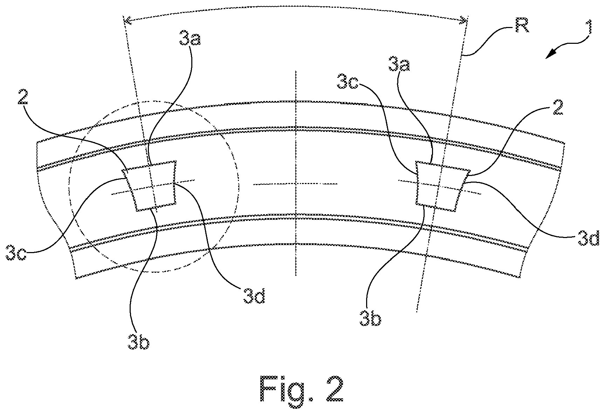

In der Figur 2 ist ein Detailausschnitt des Seitenrings 1 im Bereich der Fenster 2 gezeigt. Es ist zu erkennen, dass die Fenster 2 jeweils einen Außenrand 3a, einen Innenrand 3b, einen ersten Seitenrand 3c und einen zweiten Seitenrand 3d aufweisen. Der Außenrand 3a ist gerade ausgebildet und parallel zu dem ebenfalls gerade ausgebildeten Innenrand 3b positioniert. Der Außenrand 3a ist länger als der Innenrand 3b ausgebildet. Außenrand 3a und Innenrand 3b sind in Bezug auf einen Radialvektor R symmetrisch angeordnet. Die Seitenränder 3c und 3d sind konvex in das Fenster 2 hinein gebogen. Durch diese konvexe Ausgestaltung kann ein Steg mit einem nach außen weisenden, konkaven Profil eingesteckt und verbunden werden.

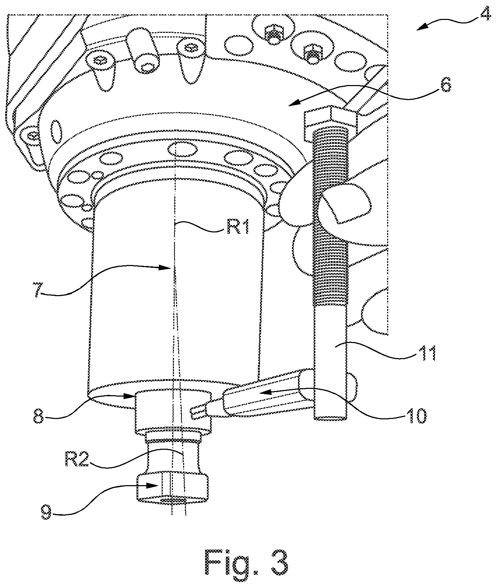

In der Figur 3 ist eine Vorrichtung 4 zum Pendelräumen von Fenstern 2 in dem Seitenring 1 dargestellt. Die Vorrichtung 4 weist ein Maschinenspindelgehäuse 6 auf, in dem ein Werkzeugaußengehäuse 7 als Werkzeugfutter rotierbar angeordnet ist. Das Werkzeugaußengehäuse 7 kann mittels eines Elektromotors oder mittels einer Werkzeugmaschine rotiert werden. In dem Werkzeugaußengehäuse 7 ist ein Werkzeuginnenschaft 8 als Werkzeugwelle angeordnet, welcher jedoch über eine oder mehrere Lager relativ zu dem Werkzeugaußengehäuse 7 drehbar in diesem gelagert ist. Das Werkzeugaußengehäuse 7 weist eine erste Rotationsachse R1 auf. Der Werkzeuginnenschaft 8 weist eine Rotationsachse R2 auf, wobei die Rotationsachse R1 und die Rotationsachse R2 einen Zwischenwinkel von zum Beispiel größer als 0,5 Grad und kleiner als 5 Grad und insbesondere von 1 Grad einnehmen. Insbesondere ist der Werkzeuginnenschaft 8 in dem Werkzeugaußengehäuse 7 exzentrisch gelagert. Die exzentrische Lagerung führt dazu, dass bei einer Rotation des Werkzeugaußengehäuses 7 der Werkzeuginnenschaft 8 nicht mitrotiert wird, sondern nur um die Rotationsachse R1 gependelt und/oder getaumelt wird.

An einem freien Ende des Werkzeuginnenschafts 8 ist ein Schneidkopf als Werkzeug 9 befestigt. Das Werkzeug 9 weist in einer axialen Draufsicht ein Werkzeugprofil auf, welches dem Profil eines der Fenster 2, jedoch verkleinert, entspricht. Durch die exzentrische Bewegung des Werkzeuginnenschafts 8 und damit des Werkzeugs 9 wird durch das Werkzeug 9 das Schneidprofil des Schneidwerkzeugs 9 als Fensterprofil in den Seitenring 1 mittels eines trennenden Verfahrens übertragen.

Um eine ungewollte Rotation des Schneidwerkzeugs 9 um die Rotationsachse R2 zu vermeiden, befindet sich an dem Werkzeuginnenschaft 8 ein senkrecht dazu herausstehender Hebel 10, welcher gegen einen Anschlag 11 anschlägt und auf diese Weise die Rotation verhindert.

Es ist darauf hinzuweisen, dass für das Pendelräumen zunächst Löcher in dem Seitenring 1 vorgebohrt werden müssen, die ein Einführen des Werkzeugs 9 in den Seitenring 1 ermöglichen.

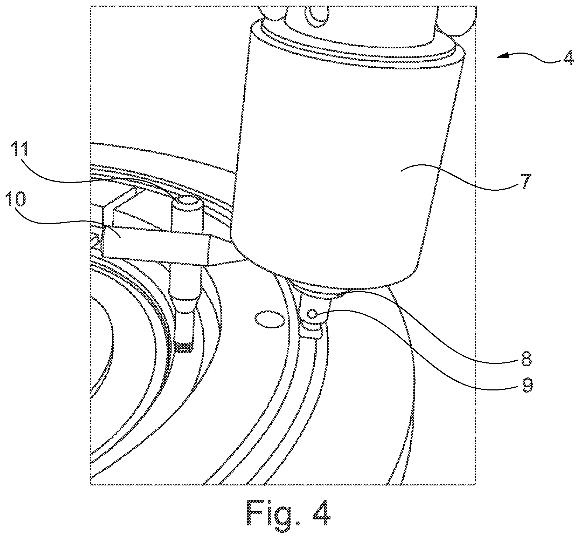

In der Figur 4 ist die Bearbeitung eines Rohseitenrings 12 dargestellt, wobei zu erkennen ist, dass der Hebel 10 gegen einen Anschlag 11 anschlägt, welcher stationär relativ zu dem Rohseitenring 12 angeordnet ist. Der Rohseitenring 12 ist stationär während der Bearbeitung angeordnet.

Anders ausgedrückt dreht sich das Werkzeugaußengehäuse 7 mit einer bestimmten Drehzahl und der Werkzeuginnenschaft 8 mit dem eingespannten Schneidwerkzeug 9 pendelt. Die Pendelbewegung wird durch das Werkzeugaußengehäuse 7 zu dem Werkzeuginnenschaft 8 durch einen Exzenter übertragen. Der Werkzeuginnenschaft 8 wird mit dem Hebel 10 in einer bestimmten Lage positioniert, festgehalten und gegen Verdrehung gesichert. Die zu erzeugende Kontur, in diesem Fall Fenster 2, muss vor der Bearbeitung vorgebohrt werden. Das Schneidwerkzeug 9 bewegt sich mit eingestelltem Vorschub durch die vorgebohrte Bohrung und erzeugt die gewünschte Fensterkontur.

Figur 5 zeigt einen Seitenring 1 mit Fenstern 2 und einen Käfigrohling 13 mit Stegen 13a in dreidimensionaler Ansicht. Der Käfigrohling 13 weist einen ringförmigen Teil 13b und daran einstückig angeformte Käfigtaschen-Begrenzungselemente 13c auf, an denen sich jeweils ein Steg 13a befindet. Die Stege 13a werden bei der Montage durch die Fenster 2 des Seitenrings 1 gesteckt und anschließend vernietet, so dass ein fester Verbund zwischen dem Seitenteil 1 und dem Käfigrohling 13 gebildet wird. Es bilden sich Käfigtaschen 15 (angedeutet durch die gestrichelte Linie) aus, in welchen später Wälzkörper geführt werden.

Figur 6 zeigt einen Ausschnitt aus einem weiteren Käfigrohling 13' mit Stegen 13a' in dreidimensionaler Ansicht. Der weitere Käfigrohling 13' weist einen ringförmigen Teil 13b und daran einstückig angeformte Käfigtaschen-Begrenzungselemente 13c auf, an denen sich jeweils ein Steg 13a' befindet.

Figur 7 zeigt einen Halbschnitt durch einen Käfig 5 umfassend einen Seitenring 1 und einen Käfigrohling 13', bei dem die Stege 13a' (vergleiche Figur 6) mit dem Seitenring 1 vernietet sind. Der vernietete Steg 14 stellt eine feste Verbindung zwischen den beiden Käfigteilen her.

Alternativ zu den Käfigrohlingen 13, 13' gemäß den Figuren 5 bis 7 können auch Käfigrohlinge in Form von Käfigtaschen-Begrenzungselementen eingesetzt werden, die an jedem Ende einen Steg aufweisen. Der Steg an jedem Ende des Käfigtaschen-Begrenzungselementes wird mit je einem Seitenring vernietet, sodass hier zwei Seitenringe vorhanden sind, zwischen denen sich die Käfigtaschen-Begrenzungselemente erstrecken. Dabei werden eine Mehrzahl an identisch ausgebildeten Käfigtaschen-Begrenzungselementen nebeneinander angeordnet, wobei zwei benachbart angeordnete Käfigtaschen-Begrenzungselemente eine Käfigtasche ausbilden. Diverse weitere Bauformen des Käfigs sind möglich, bei denen beispielsweise Käfigsegmente über zwei Seitenringe verbunden werden, wobei innerhalb eines Käfigsegments bereits mindestens eine Käfigtasche mit zwei benachbarten Käfigtaschen-Begrenzungselementen angelegt ist.

Auch der Einsatz von mehr als zwei Seitenringen bei einem Käfig ist möglich. So kann beispielsweise in einen Seitenring mit Fenstern zuerst lediglich in jedes zweite Fenster ein Steg von einer Seite des Seitenrings her eingesteckt werden und die Stege vernietet werden. Anschließend können in die noch freien Fenster des Seitenrings von der anderen Seite des Seitenrings her weitere Stege eingesteckt werden und diese vernietet werden. Da diese Stege innerhalb einer bereits gebildeten Käfigtasche vernietet werden müssen, wird hierzu eine an die Form und Größe dieser Käfigtasche, in welche der jeweilige Steg hineinragt, angepasste beziehungsweise geeignete Nieteinrichtung benötigt. Derartige Käfige können für mehrreihige Wälzlager zum Einsatz kommen, wobei hinsichtlich ihrer Form und/oder Dimensionierung unterschiedliche Wälzkörper je Wälzkörperreihe zum Einsatz kommen können.

### Bezugszeichenliste

- 1: Seitenring
- 2: Fenster
- 3a: Außenrand
- 3b: Innenrand
- 3c: Seitenrand
- 3d: Seitenrand
- 4: Vorrichtung
- 5: Käfig
- 6: Maschinenspindelgehäuse
- 7: Werkzeugaußengehäuse
- 8: Werkzeuginnenschaft
- 9: Schneidwerkzeug
- 10: Hebel
- 11: Anschlag
- 12: Rohseitenring
- 13, 13': Käfigrohling
- 13a, 13a': Steg
- 13b: ringförmiger Teil
- 13c: Käfigtaschen-Begrenzungselement
- 14: vernieteter Steg
- 15: Käfigtasche
- R: Radialvektor
- R1, R2: Rotationsachsen

## Patentansprüche

1. Seitenring (1) für einen mehrteiligen Käfig (5) für ein Wälzlager, wobei der Seitenring (1) aus einem Buntmetall, insbesondere Messing, gefertigt ist und wobei der Seitenring (1) eine Mehrzahl von Fenstern (2) zur Aufnahme von Stegen (13a, 13a') aufweist, wobei die Fenster (2) jeweils einen Außenrand (3a), einen Innenrand (3b) und zwei Seitenränder (3c, d) als Begrenzungen aufweisen, wobei der Außenrand (3a) länger als der Innenrand (3b) ausgebildet ist und wobei die Seitenränder (3c,d) gekrümmt ausgebildet sind, und wobei die Fenster (2) mittels Pendelräumen in dem Seitenring (1) eingebracht sind.

2. Seitenring (1) nach Anspruch 1, wobei der Seitenring (1) mindestens 10 Fenster (2) aufweist.

3. Seitenring (1) nach Anspruch 2, wobei die Fenster (2) in Umlaufrichtung gleichmäßig verteilt sind.

4. Seitenring (1) nach einem der vorhergehenden Ansprüche, wobei der Seitenring (1) als ein Drehteil ausgebildet ist.

5. Seitenring (1) nach einem der vorhergehenden Ansprüche, wobei die Fenster (2) in axialer Richtung ein konstantes Profil aufweisen.

6. Verfahren zum Fertigen des Seitenrings (1) nach einem der vorhergehenden Ansprüche, wobei in einen Rohseitenring die Fenster (2) mittels Pendelräumen eingebracht werden, um den Seitenring (1) zu fertigen.

7. Verfahren nach Anspruch 6, wobei ein Werkzeug (9) zum Einbringen der Fenster (2) ein Werkzeugprofil aufweist, wobei das Werkzeugprofil im mathematischen Sinn ähnlich zum Profil des Fensters (2) ist.

8. Verfahren nach Anspruch 6 oder 7, wobei der Rohseitenring als ein Drehteil ausgebildet wird.

9. Käfig (5), umfassend mindestens einen Seitenring (1) nach einem der Ansprüche 1 bis 5 sowie mindestens einen Käfigrohling (13, 13') mit mindestens einem Steg (13a, 13a'), wobei der Steg (13a, 13a') durch ein Fenster (2) des mindestens einen Seitenrings (1) geführt und vernietet ist..

10. Wälzlager umfassend einen Käfig gemäß Anspruch 9, eine Anzahl an Wälzkörpern, einen Innenring mit mindestens einer Laufbahn und einen Außenring mit mindestens einer weiteren Laufbahn.

## Claims

1. A side ring (1) for a multi-part cage (5) for an anti-friction bearing, wherein the side ring (1) is made of a non-ferrous metal, in particular brass, and wherein the side ring (1) comprises a plurality of windows (2) for receiving webs (13a, 13a'), wherein the windows (2) each have an outer edge (3a), an inner edge (3b) and two side edges (3c, d) as boundaries, wherein the outer edge (3a) is longer than the inner edge (3b) and wherein the side edges (3c, d) are curved, and wherein the windows (2) are introduced by means of pendular broaching in the side ring (1).

2. The side ring (1) according to claim 1, wherein the side ring (1) has at least 10 windows (2).

3. The side ring (1) according to claim 2, wherein the windows (2) are evenly distributed in the circumferential direction.

4. The side ring (1) according to any one of the preceding claims, wherein the side ring (1) is formed as a turned part.

5. The side ring (1) according to any one of the preceding claims, wherein the windows (2) have a constant profile in the axial direction.

6. A method for manufacturing the side ring (1) according to any one of the preceding claims, wherein the windows (2) are made in a raw side ring by means of pendular broaching in order to manufacture the side ring (1).

7. The method according to claim 6, wherein a tool (9) for introducing the window (2) has a tool profile, wherein the tool profile is similar in a mathematical sense to the profile of the window (2).

8. The method according to claim 6 or 7, wherein the raw side ring is formed as a turned part.

9. A cage (5) comprising at least one side ring (1) according to any one of claims 1 to 5 and at least one cage blank (13, 13') having at least one web (13a, 13a'), wherein the web (13a, 13a') is guided and riveted through a window (2) of the at least one side ring (1).

10. An anti-friction bearing comprising a cage according to claim 9, a number of anti-friction elements, an inner ring having at least one raceway, and an outer ring having at least one further raceway.

## Revendications

1. Anneau d'extrémité (1) pour une cage en pièces multiples (5) pour un roulement, l'anneau d'extrémité (1) étant fabriqué en métal lourd non ferreux, notamment en laiton et l'anneau d'extrémité (1) comportant une pluralité de fenêtres (2) pour recevoir des baguettes (13a, 3a'), les fenêtres (2) présentant chacune un bord extérieur (3a), un bord intérieur (3b) et deux bords latéraux (3c, d) comme limites, le bord extérieur (3a) étant conçu plus long que le bord intérieur (3b) et les bords latéraux (3c, d) étant incurvés et les fenêtres (2) étant introduites au moyen de brochages pendulaires dans l'anneau d'extrémité (1).

2. Anneau d'extrémité (1) selon la revendication 1, l'anneau d'extrémité (1) présentant au moins 10 fenêtres (2).

3. Anneau d'extrémité (1) selon la revendication 2, les fenêtres (2) étant réparties régulièrement dans la direction circonférentielle.

4. Anneau d'extrémité (1) selon l'une des revendications précédentes, l'anneau d'extrémité (1) étant conçu comme une pièce tournante.

5. Anneau d'extrémité (1) selon l'une des revendications précédentes, les fenêtres (2) présentant un profil constant dans la direction axiale.

6. Procédé de fabrication de l'anneau d'extrémité (1) selon l'une des revendications précédentes, les fenêtres (2) étant introduites dans un anneau d'extrémité brut au moyen de brochages pendulaires pour fabriquer l'anneau d'extrémité (1).

7. Procédé selon la revendication 6, un outil (9) pour introduire la fenêtre (2) présentant un profil d'outil, le profil d'outil étant similaire dans un sens mathématique au profil de la fenêtre (2).

8. Procédé selon la revendication 6 ou 7, l'anneau d'extrémité brut étant formé comme une pièce tournante.

9. Cage (5) comprenant au moins un anneau d'extrémité (1) selon l'une des revendications 1 à 5 et au moins une ébauche de cage (13, 13') avec au moins une baguette (13a, 13a'), la baguette (13a, 13a') étant guidée et rivetée à travers une fenêtre (2) de l'au moins un anneau d'extrémité (1).

10. Roulement comprenant une cage selon la revendication 9, un certain nombre d'éléments roulants, un anneau intérieur avec au moins un chemin de roulement et un anneau extérieur avec au moins un autre chemin de roulement.
